# EUROPÄISCHE PATENTSCHRIFT

(11) **EP 0 640 119 B1**
(45) Veröffentlichungstag und Bekanntmachung des Hinweises auf die Patenterteilung: **10.09.1997**
(21) Anmeldenummer: 93909897.6
(22) Anmeldetag: 05.05.1993
(51) Int. Cl.: C09J 175/12, C08G 18/08, C08G 18/12

(54) **VERWENDUNG EINER WÄSSRIGEN DISPERSION ODER LÖSUNG EINES POLYURETHANS ALS BASIS FÜR EINEN LAGERSTABILEN KONTAKTKLEBSTOFF**
USE OF AN AQUEOUS POLYURETHANE DISPERSION OR SOLUTION AS A BASIS FOR A STORAGE-STABLE CONTACT ADHESIVE
UTILISATION D'UNE DISPERSION OU D'UNE SOLUTION AQUEUSE DE POLYURETHANNE COMME BASE POUR UN ADHESIF DE CONTACT, STABLE AU STOCKAGE

(30) Priorität: 13.05.1992 DE 4215648
(43) Veröffentlichungstag der Anmeldung: 01.03.1995
(73) Patentinhaber: Henkel Kommanditgesellschaft auf Aktien, 40191 Düsseldorf (DE)
(72) Erfinder: KLAUCK, Wolfang, D-4005 Meerbusch 2 (DE); MAIER, Wolfgang, D-4000 Düsseldorf 30 (DE); BERTHAUER, Harald, D-4019 Monheim-Baumberg (DE)
(86) Internationale Anmeldenummer: EP9301096
(87) Internationale Veröffentlichungsnummer: WO9323490

(56) Entgegenhaltungen:
- EP-A- 0 163 214
- EP-A- 0 315 006
- US-A- 3 887 757

## Beschreibung

Die Erfindung betrifft die Verwendung einer wäßrigen Dispersion oder Lösung als Basis für einen lagerstabilen Kontaktklebstoff.

Kontaktklebstoffe sind überwiegend lösungsmittelbasierte Klebstoffe, die in flüssiger Form auf beide zu verklebende Substrate aufgetragen werden und nach weitgehender Verdunstung des Lösungsmittels (Ablüftzeit), d.h. wenn die Klebstoff-Filme scheinbar trocken sind, für eine gewisse Zeit (offene Zeit) fähig sind, bei Druckeinwirkung in relativ kurzer Zeit zu einer hohen Anfangsfestigkeit (Sofortfestigkeit) zu führen. Diese Anfangs- oder auch Sofort-Festigkeiten nehmen im Laufe der Lagerung zu, bis nach Stunden oder Tagen die Endfestigkeiten erreicht werden. Die Kontaktklebstoffe können daher großflächig, ohne zusätzliche Fixierung der Substrate eingesetzt werden und sind wegen ihrer einzigartigen Eigenschaftskombination oftmals die einzige Möglichkeit, zwei großflächige undurchlässige Materialien mit Sofortfestigkeiten zu kleben.

Basispolymere sind überwiegend Polychloroprene, Nitril- oder Styrol/Butadien-Kautschuk und Polyurethane. Die Kontaktklebstoffe enthalten vielfach zusätzlich als sogenannte Tackifier klebrigmachende Harze wie Kolophonium-, Kohlenwasserstoff- oder Phenol-Harze. Wegen der Problematik von organischen Lösungsmitteln wird versucht, die Kontaktklebstoffe verstärkt auf wäßrige Systeme umzustellen.

Wasserbasierte Kontaktklebstoffe sind dem Fachmann seit vielen Jahren bekannt. Sie sind aus Gründen des Umwelt- und Verbraucherschutzes willkommene Alternativen zu lösungsmittelbasierten Produkten. Das Festigkeitsspektrum wasserbasierter Kontaktklebstoffe liegt in der Regel deutlich niedriger als das analoger lösungsmittelbasierter Produkte. Das gilt insbesondere für die Wasserfestigkeit. Als Polymerbasis von wasserbasierten Kontaktklebstoffen kommen beispielsweise Naturkautschuk-Latices, Dispersionen aus Copolymerisaten des Vinylacetates, Polychloropren-Dispersionen, Acrylat-Dispersionen oder Polyvinylidenchlorid-Dispersionen in Frage. Dem Fachmann sind auch Polyurethan-Dispersionen bekannt, die durch Wärmeaktivierung ab ca. 50 °C kurzzeitig kontaktklebrig werden und die insbesondere für eine thermoaktivierbare Sohlenklebung an Schuhen eingesetzt werden. Derartige Klebstoffe besitzen meist eine niedrige Wärmestandfestigkeit (weniger als 70 °C). Darüber hinaus haben sie folgende Nachteile: Sie benötigen zusätzlich Geräte zur Wärmeaktivierung, können nicht auf beliebig großen Flächen eingesetzt werden und werden daher vom Handwerker nur bedingt akzeptiert.

Aufgabe der Erfindung ist es, einen lagerstabilen Kontaktklebstoff auf Basis von wäßrigen Dispersionen oder Lösungen bereitzustellen, der nach praxisüblichen Ablüftungszeiten (15 bis 45 Minuten) und offenen Zeiten (15 bis 90 Minuten) zu hohen Anfangs- und Endfestigkeiten, verbunden mit einer ausreichend hohen Wärmestandfestigkeit (≥ 70 °C), führt.

In der DE-OS 25 58 653 wird eine wäßrige Dispersion aus silanolhaltigem Polyurethan zur Erhöhung der öl- und wasserabweisenden Wirkung eines porösen Substrates wie Textil oder Leder beschrieben. Daraus hergestellte Filme können in unübersichtlicher Weise zufällig auch klebrig sein. So wird im Beispiel 4 eine Polyurethan-Dispersion aus Toluoldiisocyanat, Polyoxypropylendiol mit einem durchschnittlichen Molekulargewicht MGₙ von 4 000, dem
Triethylaminsalz von α-Bis(hydroxymethyl)propionsäure und dem Triethoxysilylpropylamin beschrieben. Die daraus gebildeten Filme sind weich und klebrig. Sie vermögen Glasplatten oder Kunststoff an Glas zu verbinden.
Die bekannten Dispersionen sind im allgemeinen bei Raumtemperatur und innerhalb eines pH-Bereiches von etwa 6,5 bis 9 stabil. Die Vernetzung wird durch saure und basische Katalysatoren erheblich beschleunigt. Vorteilhafterweise wird sie bei 75 bis 200 °C in 5 bis 60 Sekunden durchgeführt (siehe Seite 18, letzter Absatz bis Seite 19, erster Absatz).

Es handelt sich hierbei offensichtlich um einen Haftklebstoff, d.h. einen Klebstoff, der einseitig aufgetragen wird und zu einem permanentklebfähigen Film führt, auf dem ein zweites Substrat nach leichtem Anpreßdruck mit geringer Festigkeit haftet.

Die Lehre der DE-OS 25 58 653 wird in der EP 315 006 aufgegriffen und fortgeführt. Es wird darin eine lagerstabile, zu vernetzten Filmen auftrocknende wäßrige Lösung oder Dispersion von Alkoxysilan-Gruppen aufweisenden, kationisch modifizierten Polyurethanen beschrieben. Sie sind dann lagerfähig, wenn der pH-Wert einen Wert von 3 bis 6 aufweist. Der Gehalt an Alkoxysilan-Bindungen soll mindestens 1,3 Gew.-% betragen, berechnet als SiO₃. Die Dispersion führt zu harten und elastischen Beschichtungen. Sie ist insbesondere zur Lackherstellung geeignet (siehe Seite 8, Zeilen 1 bis 14). Von Klebrigkeit ist keine Rede, vielmehr ist für die Lackformulierung unbedingt erforderlich, daß die Filme in kürzester Zeit kleb- und blockfrei sind, um z.B. Staubanhaftungen zu vermeiden.

Nach Abänderung und Auswahl von Merkmalen der oben dargestellten Lehren auf dem Gebiet der Beschichtungen wurde die kontaktklebrige Eigenschaft von wäßrigen Dispersionen oder Lösungen eines kationisch modifizierten, Alkoxysilan-terminierten Polyurethans entdeckt und als Grundlage für die Lösung der gestellten Aufgabe verwendet.

Die erfindungsgemäße Lösung ist den Patentansprüchen zu entnehmen.

Ein Kontaktklebstoff ist dann als lagerstabil anzusehen, wenn er bei Raumtemperatur (23 °C) nach 1 Jahr ohne merkliche Viskositäts-und Eigenschaftsänderungen vorliegt.

Geeignete Isocyanate (Baustein a) sind beliebige organische Verbindungen, die im Durchschnitt mehr als eine, insbesondere 2 Isocyanatgruppen aufweisen.

Vorzugsweise werden Diisocyanate Q(NCO)₂ eingesetzt, wobei Q einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet. Beispiele derartiger bevorzugt einzusetzender Diisocyanate sind Tetramethylendiisocyanat, Hexamethylendiisocyanat, Dodecamethylendiisocyanat, 1,4-Diisocyanato-cyclohexan, 1-Isocyanato-3,3,5-trimethyl-5-isocyanato-methylcyclohexan, 4,4'-Diisocyanato-dicyclohexylmethyl, 4,4'-Diisocyanato-dicyclohexylpropan(2,2), 1,4-Diisocyanato-benzol, 2,4-Diisocyanato-toluol, 2,6-Diisocyanato-toluol, 4,4'-Diisocyanato-diphenylmethan, p-Xylylendiisocyanat, sowie aus diesen Verbindungen bestehende Gemische.
Bevorzugt werden aliphatische Diisocyanate, insbesondere m- und p-Tetramethylxylol-diisocyanat (TMXDI) und Isophoron-diisocyanat. Es ist selbstverständlich auch möglich, die in der Polyurethanchemie an sich bekannten höherfunktionellen Polyisocyanate oder auch an sich bekannte modifizierte, beispielsweise Carbodiimidgruppen, Allophanatgruppen, Isocyanuratgruppen, Urethangruppen und/oder Biuretgruppen aufweisende Polyisocyanate anteilig mitzuverwenden.

Unter dem Polyol b) ist eine Verbindung mit 2 oder mehr aliphatischen OH-Gruppen im Molekül zu verstehen. Für die beanspruchte Erfindung sind geeignet beliebige Polyether-, Polyester-, Polyetherester-, Polycarbonat- oder Polyacrylatpolyole des Molekulargewichtsbereichs 100 bis 8 000, vorzugsweise 500 bis 3 000 der aus der Polyurethanchemie an sich bekannten Art. Beliebige Gemische derartiger Polyhydroxylverbindungen können ebenfalls verwendet werden. Vorzugsweise werden als Komponente b) Polyetherpolyole oder Polyesterpolyole des genannten Molekulargewichtsbereiches eingesetzt, insbesondere Polyetherpolyole, die im statistischen Mittel 2 bis 3 alkoholische Hydroxylgruppen aufweisen. Die Herstellung dieser Ausgangsmaterialien gehört zum bekannten Stand der Technik und ist beispielsweise im Kunststoff-Handbuch, Band VII, "Polyurethane", Carl Hanser Verlag München (1966) Seiten 45 ff. beschrieben. Konkrete Beispiele für die Komponente b) sind Polypropylenglykole, Polytetrahydrofurane, Polyethylenglykole sowie deren Mischpolymerisate. Es kommen auch Polyole mit Amino-Endgruppen in Frage. Das molare Verhältnis der Komponente a) zu der Komponente b), wobei in dieser Rechnung zu der Komponente b) auch die zur Dispergierung benötigten tertiäre Amingruppen enthaltenden Bausteine hinzugezählt werden, beträgt 0,8 : 1 bis 1,8 : 1, bevorzugt 1,1 : 1 bis 1,6 : 1.

Als tertiäre Aminverbindungen c) eigenen sich beliebige hydroxy-und/oder aminofunktionelle mono- und insbesondere bifunktionelle Verbindungen des Molekulargewichtes 88 bis 1 000, vorzugsweise 89 bis 300, mit tertiären Aminstickstoffatomen, deren tertiäre Stickstoffatome während oder nach Beendigung der Isocyanat-Polyadditionsreaktion durch Neutralisierung oder Quaternisierung zumindest teilweise in tertiäre bzw. quartäre Ammoniumgruppen überführt werden können. Hierzu gehören beispielsweise Verbindungen wie 2-(N,N-Dimethylamino)-ethylamin, N-Methyldiethanolamin, N-Methyl-diisopropanolamin, N-Ethyl-diethanolamin, N-Ethyl-diisopropanolamin oder N,N'-Bis-(2-hydroxyethyl)-per-hydropyrazin, N-Methyl-bis-(3-aminopropyl)-amin, N-Methyl-bis(2-aminoethyl)-amin oder N,N',N"-Trimethyl-diethylentriamin, N,N-Dimethylaminoethanol, N,N-Diethylaminoethanol, 1-N,N-Diethylamino-2-aminoethan, 1-N,N-Diethylamino-3-aminopropan.

Die Menge der Komponente c) wird so bemessen, daß das Polyurethan in Wasser weiß dispergiert oder klar löslich ist. Vorzugsweise müssen in den Polyurethanen 2 bis 200, vorzugsweise 2 bis 100 pro 100 g Polyurethan an Ammoniumgruppen vorliegen.

Bei den einzusetzenden Alkoxysilan-Verbindungen d) handelt es sich um Verbindungen der allgemeinen Formel X-Si(OR)_{y}H_{z}, wobei
y für 2 oder 3,
z für 1 oder 0,
H für Wasserstoff oder einen Alkylrest mit 1 bis 6 C-Atomen,
X für einen organischen Rest
stehen, der mindestens eine gegenüber Isocyanatgruppen reaktionsfähige Gruppe, vorzugsweise eine Hydroxyl- oder primäre Aminogruppe, enthält, und
R für gleiche oder verschiedene Reste folgender Gruppe: Wasserstoff und vorzugsweise Alkylgruppe mit 1 bis 4 C-Atomen.

Vorzugsweise steht R für Methyl- und/oder Ethylreste und X für einen 2-Hydroxyethyl-, 3-Hydroxypropyl-, 2-(2-Hydroxyethoxy)-ethyl-, 2-(2-Aminoethylamino)-ethyl- oder 3-(3-Aminopropylamino)-propyl-Rest. Beispiele für geeignete bzw. bevorzugt geeignete Ausgangsmaterialien d) sind H₂N-(CH₂)₃-Si(O-CH₂-CH₃)₃, HO-CH(CH₃)-CH₂-Si(OCH₃)₃, HO-(CH₂)₃-Si(O-CH₃)₃, HO-CH₂-CH₂-O-CH₂-CH₂-Si(OCH₃)₃, (HO-C₂H₄)₂-N-(CH₂)₃-Si(O-CH₃)₃, HO-(C₂H₄-O)₃-C₂H₄-N(CH₃)-(CH₂)₃-Si(O-C₄H₉)₃, H₂N-CH₂-C₆H₄-CH₂-CH₂-Si(O-CH₃)₃, HS-(CH₂)₃-Si(O-CH₃)₃, H₂N-(CH₂)₃-NH-(CH₂)₃-Si(OCH₃)₃, H₂N-CH₂-CH₂-NH-(CH₂)₂-Si(O-CH₃)₃, H₂N-(CH₂)₂-NH-(CH₂)₃-Si(OCH₃)₃, HO-CH(C₂H₅)-CH₂-Si(OC₂H₅)₃, HO-(CH₂)₃-Si(O-C₂H₅)₃, HO-CH₂-CH₂-O-CH₂-CH₂-Si(OC₂H₅)₃, (HO-C₂H₄)₂-N-(CH₂)₃-Si(O-C₂H₅)₃, H₂N-CH₂-C₆H₄-CH₂-CH₂-Si(O-C₂H₅)₃, HS-(CH₂)₃-Si(O-C₂H₅)₃, H₂N-(CH₂)₃-NH-(CH₂)₃-Si(OC₂H₅)₃, H₂N-CH₂-CH₂-NH-(CH₂)₂-Si(O-C₂H₅)₃, H₂N-(CH₂)₂-NH-(CH₂)₃-Si(OC₂H₅)₃: An die Stelle eines OR-Substituenten kann auch ein H oder ein Alkylrest von C₁-C₆ treten.

Die Alkoxysilane d) werden in einer solchen Menge mitverwendet, daß in den resultierenden Polyurethanen weniger als 3,0, vorzugsweise 0,1 bis 1,3 Gew.-% - berechnet als SiO₃ und bezogen auf das Polyurethangewicht - eingebaut werden.

Es kann auch ein Kettenverlängerungsmittel (Baustein e) in einer Konzentration von 0 bis 20 Gew.-%, bezogen auf das PolyurethanGewicht mitverwendet werden. Dabei handelt es sich entweder um organische, vorzugsweise 2- und/oder 3-wertige und insbesondere 2-wertige Polyhydroxyverbindungen des Molekulargewichtsbereichs 62 bis 399, vorzugsweise 62 bis 250, oder um aminische oder hydrazinische Kettenverlängerungsmittel bwz. Vernetzer des Molekulargewichtsbereichs 32 bis 399, vorzugsweise 60 bis 250.

Zu den erstgenannten Vertretern der Aufbaukomponente e) gehören beispielsweise einfache, mehrwertige Alkohole wie Ethylenglykol, Propylenglykol, Propandiol-(1,3), Butandiol-1,4, Hexandiol-1,6, Trimethylolpropan oder Glycerin. Auch niedermolekulare Polyesterdiole wie z.B. Adipinsäure-bis-(hydroxyethyl)-ester oder niedermolekulare, Ethergruppen aufweisende Diole wie z.B. Diethylenglykol, Triethylenglykol, Tetraethylenglykol, Dipropylenglykol, Tripropylenglykol oder Tetrapropylenglykol können als Aufbaukomponente e) mitverwendet werden. Auch Carboxylgruppen-tragende und Sulfonsäuregruppen-haltige Bausteine können eventuell bis zu einer Konzentration von max. 3 Gew.-% als Aufbaukomponente mitverwendet werden. Ein bevorzugter Vertreter ist die Dimethylolpropionsäure.

Zu den letztgenannten Verbindungen gehören beispielsweise Ethylendiamin, Hexamethylendiamin, Piperazin, 2,5-Dimethylpiperazin, 1-Amino-3-aminomethyl-3,5,5-trimethyl-cyclohexan (Isophorondiamin, IPDA) 4,4'-Diamino-dicyclohexylmethan, 1,4-Diamino-cyclohexan, 1,2-Diamino-propan, Hydrazin, Hydrazinhydrat, Aminosäurehydrazide wie z.B. 2-Aminoessigsäure-hydrazid oder Bis-hydrazide wie z.B. Bernsteinsäure-bis-hydrazid.

Insbesondere die aminischen bzw. hydrazinischen Kettenverlängerungsmittel, die keinen tert. Stickstoff aufweisen, können beim erfindungsgemäßen Verfahren auch in blockierter Form, d.h. in Form der entsprechenden Ketimine (DE-AS 27 25 589) Ketazine (DE-OS 28 11 148, US-PS 4 269 748) oder Aminsalze (US-PS 4 292 226) zum Einsatz gelangen. Auch Oxazolidine, wie sie beispielsweise gemäß DE-OS 27 32 131 bzw. US-PS 4 192 937 zum Einsatz gelangen, stellen verkappte Diamine dar, die beim erfindungsgemäßen Verfahren in Analogie zu den genannten Vorveröffentlichungen zur Kettenverlängerung der NCO-Prepolymeren eingesetzt werden können. Bei der Verwendung derartiger verkappter Diamine werden diese im allgemeinen mit den NCO-Prepolymeren in Abwesenheit von Wasser vermischt und diese Mischung anschließend mit dem Dispersionswasser oder einem Teil des Dispersionswassers vermischt, so daß intermediär hydrolytisch die entsprechenden Diamine freigesetzt werden. Nach diesem Weg könnten auch direkt die Diamine oder Polyamine dem Wasser zugesetzt werden.

Weitere Vertreter von beim erfindungsgemäßen Verfahren als Aufbaukomponenten e) einzusetzenden Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32 bis 42 und Seiten 44 bis 54 und Band II, 1964, Seiten 5 bis 6 und 198 bis 199, sowie im Kunststoff-Handbuch, Band VII, Vieweg-Höchtlen, Carl-Hanser-Verlag, München, 1966, z.B. auf den Seiten 45 bis 71, beschrieben.

Die Mitverwendung von im Sinne der Isocyanat-Polyadditionsreaktion tri- oder höherfunktionellen Verbindungen mit gegenüber Isocyanatgruppen reaktionsfähigen Gruppen in geringen Anteilen zur Erzielung eines gewissen Verzweigungsgrades ist ebenso möglich wie die bereits erwähnte mögliche Mitverwendung von tri- oder höherfunktionellen Polyisocyanaten zum gleichen Zweck. Auch einwertige Alkohole wie z.B. n-Butanol oder n-Dodecanol und Stearylalkohol können in geringen Mengen mitverwendet werden.

Vorzugsweise werden als Kettenverlängerungsmittel Wasser, Diole und Triole mit niedrigem Molekulargewicht von bis zu 399 eingesetzt.

Die tertiäre Aminverbindung c) wird mit anorganischen oder organischen Säuren umgesetzt, so daß sich ein pH-Wert im Bereich von 2,5 bis weniger als 6,5 einstellt. Prinzipiell sind dafür alle Substanzen geeignet, die nach dieser Neutralisationsreaktion in der Lage sind, mit dem tertiären Amin Salze zu bilden. Besonders geeignet sind Säuren, z.B. Salzsäure, Essigsäure, Fumarsäure, Maleinsäure, Milchsäure, Weinsäure, Oxalsäure, Schwefelsäure, schweflige Säure oder Phosphorsäure. Vorzugsweise werden CO₂ (Kohlensäure), Ameisensäure, Essigsäure oder Salzsäure eingesetzt. Es können auch sauer wirkende Verbindungen eingesetzt werden, z.B. Anhydride.

Der Kontaktklebstoff kann zweckmäßigerweise bis zu 30 % Hilfsmittel enthalten, z.B. klebrigmachende Harze wie Kolophonium-, Kohlenwasserstoff- oder Phenol-Harze, insbesondere Koniferenharze (Kolophonium) und deren durch Disproportionierung, Hydrierung, Addition, Veresterung und Polymerisation gewonnenen Umwandlungsprodukte, Cumaron-Indenharze, Terpenharze, Furanharze, Ketonharze (wie Acetonphenonharze, Cyclohexonharze), Polyamidharze, Terpenphenolharze, Alkylphenolharze, Kohlenwasserstoffharze. Statt fertiger Harzdispersionen können auch die genannten Harze durch Schmelzemulgierung mit Hilfe der unter A) genannten Polyurethane mit oder ohne weitere Emulgatoren in Dispersion überführt werden. Die Harze können aber auch vor der Dispergierung direkt ins Prepolymer eingearbeitet werden. Es können auch bis zu 25 Gew.-% an folgenden Dispersionen zugesetzt werden: Homo- und Copolymerisate aus Vinylacetat mit insbesondere Ethylen als Comonomeren, Homo- und Copolymerisate aus Acrylaten mit insbesondere Styrol und Vinylacetat als Comonomeren, Homo- und Copolymerisate aus Styrol mit insbesondere Butadien als Comonomeren und Polychloropren.

Weitere, für Dispersionen typische Zusatzstoffe sind z.B. Konservierungsmittel, Alterungs- und Lichtschutzmittel, inerte Füllmaterialien usw.

Die erfindungsgemäß zu verwendende Dispersion bzw. Lösung kann auf an sich bekannte Weise hergestellt werden. Zweckmäßig ist es jedoch, ihn in folgenden Stufen herzustellen:
A) Umsetzung des Isocyanats a) mit den Polyolen b) und der tertiären Aminverbindung c) zu einem Polyurethan-Prepolymeren mit überschüssigen NCO-Gruppen,
B) Umsetzung aller oder nur eines Teiles der NCO-Gruppen des Prepolymeren mit den Alkoxysilanen d),
C) Überführung des Alkoxysilan-terminierten und eventuell gleichzeitig NCO-terminierten Prepolymeren in die wäßrige Phase durch Zusatz von Wasser, das zusätzlich ein aminisches Kettenverlängerungsmittel e) enthalten kann, sowie
D) Einstellung des pH-Wertes durch Zusatz der Säuren f) bis zu einem pH-Wert zwischen 2,5 und weniger als 6,5, wobei die Säure im Wasser schon von Anfang an enthalten sein kann oder eventuell dem Prepolymer vor der Dispergierung mitgegeben wird.

Die Umsetzung des Isocyanats A) kann in Gegenwart eines organischen, mit Wasser mischbaren inerten Lösungsmittels, wie z.B. Aceton oder N-Methylpyrrolidon erfolgen. Es wird dann destillativ nach Überführung in die wäßrige Phase C) entfernt. Vorteilhafterweise wird das Prepolymere jedoch ohne Lösungsmittel hergestellt. Die Temperatur der Umsetzung A) liegt im allgemeinen bei 5 bis 160 °C, vorzugsweise bei 50 bis 120 °C.

Das Prepolymere mit NCO-Gruppen wird mit dem Alkoxysilan bei 50 bis 120 °C ganz oder teilweise umgesetzt. Vorzugsweise werden die NCO-Gruppen nur teilweise mit den Alkoxysilanen umgesetzt, zum anderen Teil mit Kettenverlängerungsmitteln, insbesondere mit Wasser.

Die Überführung des Alkoxysilan-terminiertem Prepolymeren in die wäßrige Phase (Stufe C) erfolgt im allgemeinen zwischen 20 und 100 °C. Es wird soviel Wasser verwendet, daß eine 10- bis 60-, vorzugsweise 20- bis 50-gewichtsprozentige Lösung bzw. Dispersion der Polyurethane erhalten wird. Das Wasser kann ein Kettenverlängerungsmittel e) sowie die benötigte Menge an Säuren f) enthalten. Vorteilhafterweise wird zum Schluß der gewünschte pH-Wert eingestellt.

Die Herstellung der erfindungsgemäß zu verwendenden Lösungen oder Dispersionen ist nicht auf das beschriebene Verfahren beschränkt, welches lediglich den bevorzugten Weg darstellt. So wäre es beispielsweise auch möglich, die in den NCO-Prepolymeren vorliegenden tert. Aminogruppen zunächst durch Quaternierung zumindest teilweise in Ammoniumgruppen zu überführen oder anstelle von tertiäre Aminstickstoffatome aufweisenden Aufbaukomponenten c) analoge, bereits Ammoniumgruppen aufweisende Aufbaukomponenten bei der Herstellung der NCO-Prepolymeren einzusetzen. Auch in einem solchen Falle lägen letztendlich Polyurethane vor, die den obengemachten Angaben bezüglich ihres Gehalts an Ammoniumgruppen entsprechen. Der Begriff "Ammoniumgruppen" steht daher stellvertretend für ternäre Ammoniumgruppen, wie sie durch Neutralisation eines tertiären Amins mit einer Säure entstehen und für quaternäre Ammoniumgruppen, wie sie durch Alkylierung einer tertiären Aminogruppe erhalten werden.

Die erfindungsgemäß zu verwendenden Lösungen oder Dispersionen des kationisch modifizierten, Alkoxysilan-terminierten Polyurethans können als solche unmittelbar zum Verkleben beliebiger organischer oder anorganischer Substrate eingesetzt werden. Vorzugsweise werden ihnen jedoch noch bis zu 30 % Hilfsmittel zugemischt, z.B. Licht-und Alterungsschutzmittel, Konservierungsmittel, Harze oder Harzdispersionen und Anteile anderer nicht kontaktklebriger Dispersionen.

Der Kontaktklebstoff kann wie üblich verwendet werden (siehe z.B. Habenicht "Kleben", Springer Verlag, 1986), d.h. die wäßrige Dispersion wird auf beide zu verbindenden Substrate aufgetragen. Nun wird das Wasser entfernt, sei es durch Verdunsten und/oder durch Aufsaugen in die Werkstoffe. Je nach Feststoffgehalt und klimatischen Bedingungen ist hierfür eine Ablüftzeit (= Mindesttrockenzeit) von 10 bis 45 Minuten notwendig. Werden die Fügeteile innerhalb dieser Zeit zusammengepreßt, so erhält man eine Verklebung mit nur sehr geringer Festigkeit bzw. die Teile rutschen sogar auseinander. Nach dieser Mindesttrokkenzeit steigt die Festigkeit beim Zusammenpressen der Substrate zunächst sprunghaft an, verringert sich dann aber wieder stark auf nahezu unbedeutende Werte am Ende der Zeit (= Kontaktklebzeit). Nach dieser maximalen Trockenzeit (Summe aus Ablüftzeit und Kontaktklebzeit) wird nur eine geringe oder gar keine Festigkeit erhalten.

Bei einem Kontaktklebstoff ist es also wichtig, den zeitlichen Ablauf der Kontaktklebzeit genau einzuhalten. Das ist einer der Gründe, weshalb die Entdeckung der kontaktklebrigen Eigenschaften von Alkoxysilan-terminierten, ionisch modifizierten Polyurethan-Dispersionen überraschte. Um sie festzustellen, mußten beide Substratteile damit behandelt werden. Außerdem mußten scheinbar trokkene Klebstoff-Filme zusammengepreßt werden. Vor allem mußte aber die Dispersion so modifiziert werden, daß eine Autohäsion möglich ist.

Die Überlegenheit der Kontaktklebstoffe gegenüber herkömmlichen wasserbasierten Kontaktklebstoffen wird durch folgende Messungen belegt:
A 1. Wasserfestigkeit
   Dabei werden getrocknete Klebstoff-Filme (Dicke: 0,3 mm) nach 7 Tagen Trocknungszeit bei Raumtemperatur im Wasser 48 Stunden gelagert und visuell und manuell begutachtet.
A 2. Wärmestandfestigkeit
   Buchenholzprüfkörper (10 x 2 x 0,5 cm³) werden 1 cm überlappt (2 cm²), nach 3 Tagen mit 1 kg belastet und alle 3 Stunden die Temperatur um 10 °C erhöht (Start 30 °C). Die Temperatur, bei der die Prüfkörper nach der Belastung widerstehen, wird als Wärmestandfestigkeit bezeichnet.
A 3. Die Anfangsfestigkeit
   Die Anfangsfestigkeit wird nach einer Ablüftezeit von 30 min (23 °C, 50 % relativer Luftfeuchte) durch Verpressen von Buchensperrholzprüfkörpern (10 x 5 x 0,5 cm³) mit einer Überlappungsfläche von 10 cm² und einem Anpreßdruck von 0,5 N/mm² (20 Sekunden) 2 Minuten nach dem Pressen in einer Reißmaschine bestimmt.

Die Kontaktklebstoffe wurden folgendermaßen charakterisiert:
B 1. Die Lagerstabilität wird nach folgender Methode bestimmt. Verfolgung der Viskosität eingelagerter Proben bei 23 °C und 40 °C über 3 bis 6 Monate, Abweichung von weniger als 25 % (bezogen auf die Ausgangsviskosität) gelten als lagerfähig nach 3 bis 6 Monaten.
B 2. Der SiO₃-Gehalt wird elementar-analytisch anhand des Si-Gehaltes berechnet bzw. direkt aus den eingesetzten Mengen Alkoxysilan berechnet.
B 3. Die Konzentration der tertiären Amingruppen läßt sich über den Einsatz der tertiären Amingruppen tragender Bausteine ableiten.
B 4. Nach erfolgter Prepolymerreaktion wird der noch vorhandene Rest-NCO-Gehalt als 100 % bezeichnet. Die anschließende Umsetzung mit dem Alkoxysilanen reduziert diesen Gehalt um einen gewissen Prozentsatz. Der danach noch vorliegende Rest-NCO-Gehalt kann zur Kettenverlängerung im Wasser genutzt werden.

Die Erfindung wird anhand folgender Beispiele näher erläutert:
C 1. Herstellung der Klebstoffe:
   Die Polyole, die Dihydroxy- bzw. Diaminoaminverbindungen und die Diisocyanate werden bei 70 bis 90 °C solange umgesetzt, bis der theoretische Rest-NCO-Gehalt erreicht ist. Lösemittel können zur Viskositätsreduzierung zugesetzt werden. Anschließend erfolgt eine Umsetzung der Alkoxysilanbausteine mit einem Teil der noch vorhandenen Rest-NCO-Gruppen, bis der dann noch mögliche Rest-NCO-Gehalt erreicht ist. Anschließend erfolgt bei dieser Temperatur von 40 bis 70 % die Dispergierung in Wasser, dem die zur Neutralisation erforderliche Menge an Säure zugegeben wurde. Aminische Kettenverlängerer können eventuell an dieser Stelle zugegeben werden. Nach einer Nachrührzeit von ca. 1 Std. bei 60 °C ist die Dispergierung abgeschlossen. Die konkreten Daten zu dieser allgemeinen Vorschrift sind der Tabelle 1 zu entnehmen.
C 2. Verklebungen:
   Die Prüfkörper (10 x 5 x 0,5 cm) werden mit dem Klebstoff so eingestrichen, daß ein ca. 0,4 mm dicker Naßfilm entsteht. Nach ca. 30 bis 40 min Ablüftezeit bei 23 °C / 50 % relativer Luftfeuchte erfolgt die Verpressung mit einer Überlappung von 2 cm (10 cm²) und einem Anpreßdruck von 0,5 N/mm².
C 3. Messungen:
   Sofortfestigkeiten werden unmittelbar nach der Verklebung (ca. 2 min danach) und Endfestigkeiten nach 3 Tagen mittels einer Prüfmaschine (Zwick) bestimmt. Schälwerte werden mittels 90 ° Schälung bei gleichem Anpreßdruck an Streifen (20 x 2 x 0,5 cm³) bestimmt. Die konkreten Meßergebnisse sind der Tabelle 2 zu entnehmen.
C 4. Ergebnisse:
   Ein Vergleich der erfindungsgemäßen Beispiele M 1, M 2, M 3 und M 5 mit den übrigen Beispielen zeigt, daß die Wasserfestigkeit gegenüber herkömmlichen wasserbasierten Kontaktklebstoffen (MO) in jedem Fall und die Wärmestandfestigkeit in allen Fällen außer M 1 verbessert wurde und daß die Anfangs-, End- und Schälfestigkeiten gleich gut (M 5) oder besser (M 1, M 2, M 3) sind.

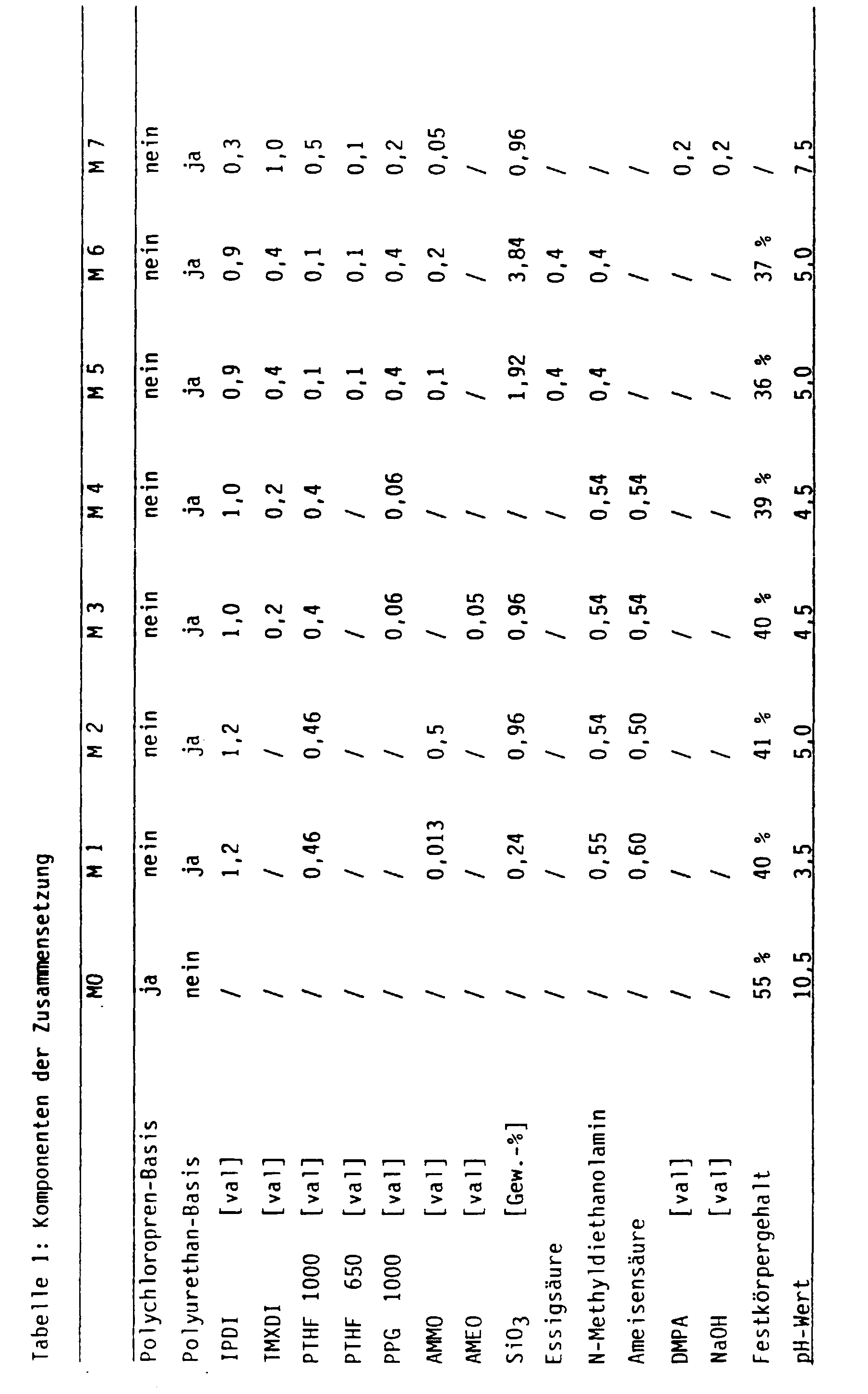

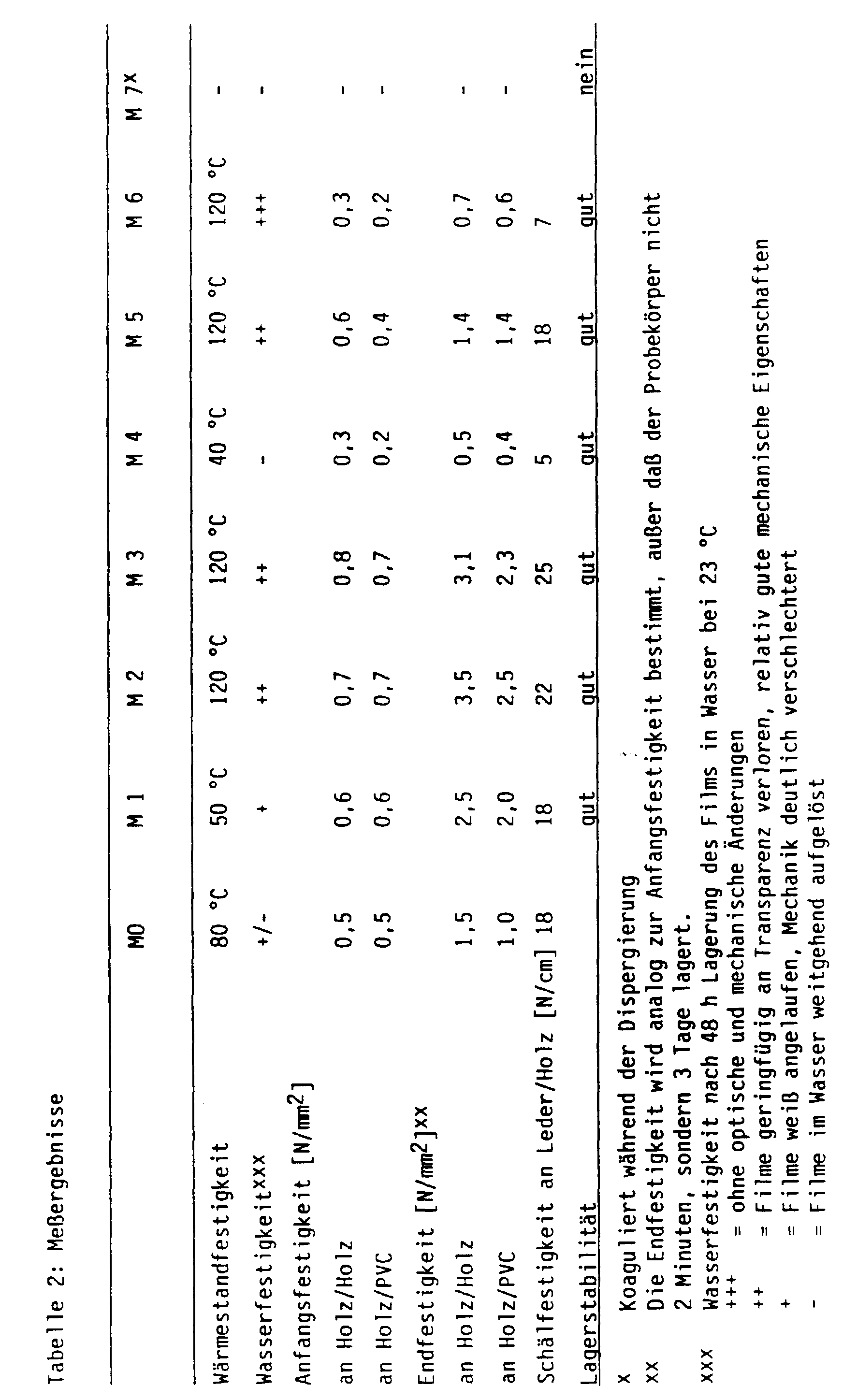

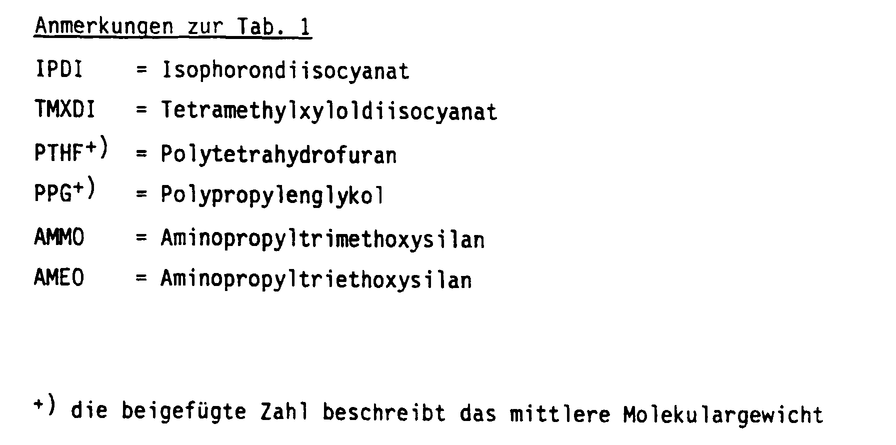

## Patentansprüche

1. Verwendung einer wäßrigen Dispersion oder Lösung eines kationisch modifizierten, Alkoxysilan-terminierten Polyurethans, das unter Verwendung folgender Bausteine herstellbar ist:
a) Isocyanat mit einer Funktionalität > 1,
b) Polyol,
c) tertiäre Aminverbindung mit mindestens einer gegenüber Isocyanaten reaktiven Gruppe in einer solchen Konzentration, daß das Polyurethan nach Neutralisation mit Säuren in Wasser löslich oder dispergierbar ist,
d) Alkoxysilan der allgemeinen Formel
X-Si(-OR)_{y}H_{z},
wobei
y für 2 oder 3,
z für 1 oder 0,
H = Wasserstoff oder Alkylrest mit 1 bis 6 C-Atomen,
X für einen organischen Rest steht, der mindestens eine gegenüber Isocyanatgruppen reaktionsfähige Gruppe enthält, und
R für gleiche oder verschiedene Reste folgender Gruppe:
Wasserstoff und Alkylgruppe mit 1 bis 4 C-Atomen, in einer Konzentration von weniger als 3,0 Gewichtsprozent, gerechnet als SiO₃ und bezogen auf das Polyurethan-Gewicht,
e) 0 bis 20 Gew.-% Kettenverlängerungsmittel, bezogen auf das Polyurethan-Gewicht, sowie
f) anorganische oder organische Säuren zur Einstellung des pH-Wertes im Bereich von 2,5 bis weniger als 6,5
als Basis für einen lagerstabilen Kontaktklebstoff.

2. Verwendung nach Anspruch 1, gekennzeichent durch Isocyanate mit einer Funktionalität von 2, insbesondere aliphatische Diisocyanate, z.B. Tetramethylxyloldiisocyanat (TMXDI) oder Isophorondiisocyanat.

3. Verwendung nach Anspruch 1, gekennzeichnet durch Polyole mit Polyester- und Polyether-Segmenten, insbesondere mit durchschnittlichen Molekular-Gewichten MGₙ von 100 bis 8 000, wobei Polyether-Polyole bevorzugt werden.

4. Verwendung nach Anspruch 1, gekennzeichnet durch eine Konzentration der tertiären Aminverbindung zwischen 2 und 200 Milliäquivalenten pro 100 g Polyurethan.

5. Verwendung nach Anspruch 1, dadurch gekennzeichnet, daß die Alkoxysilankonzentration zwischen 0,1 und 3,0 Gew.-% liegt, berechnet als SiO₃ und bezogen auf das Polyurethan-Gewicht, bevorzugt zwischen 0,1 und 1,3 %.

6. Verwendung nach Anspruch 1, gekennzeichnet durch Kettenverlängerungsmittel aus folgender Gruppe: Wasser, Diole und Triole mit niedrigem Molekulargewicht von ≤ 399.

7. Verwendung nach Anspruch 1, gekennzeichnet durch die Verwendung folgender Säuren: Kohlensäure, Ameisensäure, Essigsäure oder Salzsäure, insbesondere durch die Verwendung von Ameisensäure.

## Claims

1. The use of an aqueous dispersion or solution of a cationically modified, alkoxysilane-terminated polyurethane obtainable from the following components:
a) an isocyanate having a functionality of more than 1,
b) a polyol,
c) a tertiary amine compound containing at least one isocyanate-reactive group in such a concentration that the polyurethane can be dissolved or dispersed in water after neutralization with acids,
d) an alkoxysilane corresponding to the general formula
X-Si(-OR)_{y}H_{z},
in which
y = 2 or 3,
z = 1 or 0,
H is hydrogen or a C₁₋₆ alkyl radical,
X is an organic radical containing at least one isocyanate-reactive group and the R's may be the same or different and represent substituents from the following group: hydrogen and C₁₋₄, alkyl groups,
in a concentration of less than 3.0% by weight, expressed as SiO₃ and based on the weight of the polyurethane,
e) 0 to 20% by weight of a chain-extending agent, based on the weight of the polyurethane, and
f) inorganic or organic acids for establishing a pH value in the range from 2.5 to below 6.5
as the basis for a storable contact adhesive.

2. The use claimed in claim 1, characterized by isocyanates having a functionality of 2, more particularly aliphatic diisocyanates, for example tetramethyl xylene diisocyanate (TMXDI) or isophorone diisocyanate.

3. The use claimed in claim 1, characterized by polyols having polyester and polyether segments, more particularly with average molecular weights MWₙ in the range from 100 to 8,000, polyether polyols being preferred.

4. The use claimed in claim 1, characterized by a concentration of the tertiary amine compound of 2 to 200 milliequivalents per 100 g of polyurethane.

5. The use claimed in claim 1, characterized in that the alkoxysilane concentration is between 0.1 and 3.0% by weight, expressed as SiO₃ and based on the weight of the polyurethane, and preferably between 0.1 and 1.3%.

6. The use claimed in claim 1, characterized by chain-extending agents from the following group: water, diols and triols having low molecular weights of ≤ 399.

7. The use claimed in claim 1, characterized by the use of the following acids: carbonic acid, formic acid, acetic acid or hydrochloric acid, more particularly formic acid.

## Revendications

1. Utilisation d'une dispersion ou solution aqueuse d'un polyuréthanne cationiquement modifié, à terminaison alcoxysilane, lequel peut être fabriqué en utilisant les composants suivants :
a) un isocyanate de fonctionnalité > 1,
b) un polyol,
c) un composé amine tertiaire comportant au moins un groupe réactif envers les isocyanates en une concentration telle que le polyuréthanne peut, après neutralisation avec des acides, être dissous ou mis en dispersion dans l'eau,
d) un alcoxysilane selon la formule générale
X-Si(-OR)_{y}H_{z},
dans laquelle représentent :
y 2 ou 3,
z 1 ou 0,
H = un hydrogène ou un radical alkyle comportant 1 à 6 atomes de carbone,
X un radical organique contenant au moins un groupe susceptible de réagir avec les groupes isocyanates, et R des radicaux égaux ou différents parmi le groupe suivant : hydrogène ou groupe alkyle comportant 1 à 4 atomes de carbone,
en une concentration de moins de 3 % en poids, calculé comme SiO₃ et par rapport au poids du polyuréthanne,
e) 0 à 20 % en poids d'un agent de prolongement de la chaîne par rapport au poids du polyuréthanne, ainsi que
f) des acides inorganiques ou organiques permettant de régler un pH compris entre 2,5 et moins que 6,5.
comme base pour un adhésif de contact stable au stockage.

2. Utilisation selon la revendication 1,
caractérisée par
des isocyanates d'une fonctionnalité 2, en particulier des diisocyanates aliphatiques, par exemple le tétraméthylxylènediisocyanate (TMXDI) ou l'isophoronediisocyanate.

3. Utilisation selon la revendication 1,
caractérisée par
des polyols comportant des segments polyester et polyéther, en particulier de poids moléculaire moyen MGₙ compris entre 100 et 8 000, où les polyols de polyéther sont favorisés.

4. Utilisation selon la revendication 1,
caractérisée par
une concentration du composé amine tertiaire comprise entre 2 et 200 milliéquivalents par 100 g de polyuréthanne.

5. Utilisation selon la revendication 1,
caractérisée en ce que
la concentration en alcoxysilanes est comprise entre 0,1 et 3,0 % en poids, calculé comme SiO₃ et par rapport au poids du polyuréthanne, de préférence entre 0,1 et 1,3 %.

6. Utilisation selon la revendication 1,
caractérisée par
un agent de prolongement des chaînes parmi le groupe suivant : l'eau, les diols et triols à faible poids moléculaire de ≤ 399.

7. Utilisation selon la revendication 1,
caractérisée par
l'utilisation des acides suivants : l'acide carbonique, l'acide formique, l'acide acétique ou l'acide chlorhydrique, en particulier par l'utilisation d'acide formique.
